# EUROPEAN PATENT APPLICATION

(11) **EP 4 254 538 A1**
(43) Date of publication of application: **04.10.2023**
(21) Application number: 20967506.5
(22) Date of filing: 30.12.2020
(51) Int. Cl.: H01M 4/13

(54) **ELECTRODE ASSEMBLY AND ELECTROCHEMICAL DEVICE**

(71) Applicant: Ningde Amperex Technology Limited, Ningde, Fujian 352100 (CN)
(72) Inventor: WU, Hua, Ningde, Fujian 352106 (CN); ZHAO, Yi, Ningde, Fujian 352106 (CN); PENG, Yejun, Ningde, Fujian 352106 (CN); GUO, Peipei, Ningde, Fujian 352106 (CN)
(74) Representative: Icosa
(86) International application number: PCT/CN2020/141276
(87) International publication number: WO 2022/141161

(57) **Abstract**

This application provides an electrode assembly, including a positive electrode plate, a negative electrode plate, a separator, and a positive electrode tab. The positive electrode plate includes a positive electrode current collector and a positive electrode active substance layer disposed on surface of the positive electrode current collector, the negative electrode plate includes a negative electrode current collector and a negative electrode active substance layer disposed on surface of the negative electrode current collector, and the separator is disposed between the positive electrode plate and the negative electrode plate. The positive electrode active substance layer is provided with a first groove, and one end of the positive electrode tab is disposed in the first groove and is electrically connected to the positive electrode current collector. The negative electrode active substance layer is provided with a second groove, the second groove is corresponding to the first groove, and the second groove extends along a thickness direction of the electrode assembly to the negative electrode current collector. The second groove is provided with a first protective adhesive inside, so as to ensure thickness consistency between the groove and a body zone of the electrode plate and alleviate the under-voltage problem at the tab position, thus reducing the risk of short circuit. This application further provides an electrochemical apparatus containing the foregoing electrode assembly.

## Description

### TECHNICAL FIELD

This application relates to the field of batteries, and in particular, to an electrode assembly and an electrochemical apparatus containing such electrode assembly.

### BACKGROUND

Lithium-ion batteries are now widely applied in convenient application scenarios such as consumer electronics and electronic tools, and battery cells with fast-charging design account for an increasing proportion of market applications. In recent years, with the development of fast-charging battery cells, there is a demand for battery cell structures with lower internal resistance. Therefore, a structure with a groove in the middle of an electrode plate is developed and applied, so that a tab is welded in the middle of an electrode plate. This structure can significantly reduce the internal resistance of the battery cell and improve the charging and discharging speed. However, in this structure, there is a large local thickness difference at the position of the groove, which reduces consistency of surface of the electrode plate, resulting in undervoltage in some zones of the battery cell in the formation process. In the late cycle of the cell, the defective zone has lithium precipitation caused by poor interface infiltration, and therefore thermal runaway easily occurs due to internal short circuit.

### SUMMARY

In view of the foregoing situation, this application provides an electrode assembly and an electrochemical apparatus containing such electrode assembly. A first protective adhesive is filled to a groove to ensure the thickness consistency between the groove and a body zone of an electrode plate, so as to alleviate the under-voltage problem at the tab position, thus reducing the risk of lithium precipitation.

Some embodiments of this application provide an electrode assembly, including a positive electrode plate, a negative electrode plate, a separator, and a positive electrode tab. The positive electrode plate includes a positive electrode current collector and a positive electrode active substance layer disposed on surface of the positive electrode current collector. The negative electrode plate includes a negative electrode current collector and a negative electrode active substance layer disposed on surface of the negative electrode current collector. The separator is disposed between the positive electrode plate and the negative electrode plate. The positive electrode tab is electrically connected to the positive electrode current collector. The positive electrode active substance layer is provided with a first groove, and one end of the positive electrode tab is disposed in the first groove and is electrically connected to the positive electrode current collector. The negative electrode active substance layer is provided with a second groove, the second groove is corresponding to the first groove, the second groove extends along a thickness direction of the electrode assembly to the negative electrode current collector, and the second groove is provided with a first protective adhesive inside.

In some embodiments, along the thickness direction of the electrode assembly, thickness of the first protective adhesive is less than or equal to depth of the second groove.

In some embodiments, the positive electrode plate includes a first end and a second end disposed opposite each other, and in a direction from the first end to the second end, width of the positive electrode tab is less than width of the second groove.

In some embodiments, periphery of the first protective adhesive is in contact with the negative electrode active substance layer.

In some embodiments, the positive electrode plate, the separator and the negative electrode plate are disposed in sequence and wound.

In some embodiments, the positive electrode plate is provided with a first insulator, and the first insulator covers the first groove.

In some embodiments, the first insulator covers part of the positive electrode active substance layer.

In some embodiments, the negative electrode plate is provided with a second insulator, and the second insulator covers the second groove.

In some embodiments, the second insulator covers part of the negative electrode active substance layer.

In some embodiments, in the thickness direction of the electrode assembly, projection area of the first insulator is greater than projection area of the second insulator.

In some embodiments, the first groove is provided with a second protective adhesive inside.

In some embodiments, periphery of the second protective adhesive is in contact with the positive electrode active substance layer.

In some embodiments, the first protective adhesive is adhesive paper, a coated adhesive layer or an added adhesive.

In some embodiments, the first protective adhesive has a width of W1, the second groove has a width of W2, the second insulator has a width of W3, and the first insulator has a width of W4, where W1 < W2 < W3 < W4.

In some embodiments, the first protective adhesive has a length of L1, the second groove has a length of L2, the second insulator has a length of L3, and the first insulator has a length of L4, where L1 < L2 < L3 < L4.

In some embodiments, the first protective adhesive has a thickness of T1, and the second groove has a depth of T2, where T1 ≤ T2.

In some embodiments, a size relationship between the second groove and the first protective adhesive satisfies: 0 mm ≤ L2-L1 ≤ 5 mm, 0 mm ≤ W2-W1 ≤ 5 mm, and 0 µm ≤ T2-T1 ≤ 20 µm.

In some embodiments, the size relationship between the second groove and the first protective adhesive satisfies: 1 mm ≤ L2-L1 ≤ 5 mm, 1 mm ≤ W2-W1 ≤ 5 mm, and 0 µm ≤ T2-T1 ≤ 20 µm.

In some embodiments, a size relationship between the second groove and the second insulator satisfies: 1 mm ≤ L3-L2 ≤ 5 mm, and 1 mm ≤ W3-W2 ≤ 5 mm.

In some embodiments, a size relationship between the first insulator and the second insulator satisfies: 1 mm ≤ L4-L3 ≤ 10 mm, and 1 mm ≤ W4-W3 ≤ 10 mm.

In some embodiments, a size relationship between the first insulator and the second groove satisfies: 1 mm ≤ L4-L2 ≤ 10 mm, and 1 mm ≤ W4-W2 ≤ 10 mm.

In some embodiments, the size relationship between the first protective adhesive and the second groove satisfies: W1 = W2, and L1 = L2.

In some embodiments, the positive electrode tab has a width of W0 and the positive electrode tab has a length of L0 in the first groove, where L0 < L1 = L2, and W0 < W1 = W2.

In some embodiments, the size relationship between the first insulator and the second groove satisfies: 1 mm ≤ L4-L2 ≤ 10 mm, and 1 mm ≤ W4-W2 ≤ 10 mm.

In some embodiments, width of the second protective adhesive and width of the first groove are the same, both of which are W5; length of the second protective adhesive and length of the first groove are the same, both of which are L5, and a size relationship between the first groove and the second groove satisfies: 1 mm ≤ L5-L2 ≤ 10 mm, and 1 mm ≤ W5-W2 ≤ 10 mm.

Some embodiments of this application further provide an electrochemical apparatus, including a packaging case and the foregoing electrode assembly, where the electrode assembly is accommodated in the packaging case.

In the electrode assembly, the first protective adhesive is filled to the second groove to ensure thickness consistency between the second groove and a body zone of the electrode plate, so as to alleviate the under-voltage problem at the tab position, thus reducing the risk of lithium precipitation. In addition, in the forgoing electrode assembly, the second groove is corresponding to the first groove and extends along a thickness direction of the electrode assembly to the negative electrode current collector. This is to leave enough space for welding burrs of the positive electrode tab to prevent the welding burrs from penetrating the second groove; and even if the welding burrs penetrate the second groove, the positive electrode current collector electrically connected to the positive electrode tab comes into contact with the negative electrode current collector rather than the negative electrode active substance layer, thus preventing the most dangerous short circuit.

### BRIEF DESCRIPTION OF DRAWINGS

FIG. 1 is a schematic diagram of a winding structure of an electrode assembly according to embodiment 1.
FIG. 2 is a schematic diagram of a partial structure of the electrode assembly shown in FIG. 1, with a separator omitted.
FIG. 3 is a schematic diagram of an unfolded structure of a positive electrode plate and a negative electrode plate in the electrode assembly shown in FIG. 1.
FIG. 4 is a schematic diagram of a winding structure of an electrode assembly according to embodiment 2.
FIG. 5 is a schematic diagram of a partial structure of the electrode assembly shown in FIG. 4, with a separator omitted.
FIG. 6 is a schematic diagram of an unfolded structure of a positive electrode plate and a negative electrode plate in the electrode assembly shown in FIG. 4.
FIG. 7 is a schematic diagram of a winding structure of an electrode assembly according to embodiment 3.
FIG. 8 is a schematic diagram of a partial structure of the electrode assembly shown in FIG. 7, with a separator omitted.
FIG. 9 is a schematic diagram of an unfolded structure of a positive electrode plate and a negative electrode plate in the electrode assembly shown in FIG. 7.
FIG. 10 is a schematic diagram of a winding structure of an electrode assembly according to embodiment 4.
FIG. 11 is a schematic diagram of a partial structure of the electrode assembly shown in FIG. 10, with a separator omitted.
FIG. 12 is a schematic diagram of an unfolded structure of a positive electrode plate and a negative electrode plate in the electrode assembly shown in FIG. 10.
FIG. 13 is a schematic diagram of a winding structure of an electrode assembly according to embodiment 5.
FIG. 14 is a schematic diagram of a partial structure of the electrode assembly shown in FIG. 13, with a separator omitted.
FIG. 15 is a schematic diagram of an unfolded structure of a positive electrode plate and a negative electrode plate in the electrode assembly shown in FIG. 13.

**Reference signs of main components:**

| | |
|---|---|
| Electrode assembly | 100, 200, 300, 400, 500 |
| Positive electrode plate | 10 |
| First end | 101 |
| Second end | 102 |
| First side | 103 |
| Second side | 104 |
| Positive electrode current collector | 11 |
| Positive electrode active substance layer | 12 |
| First groove | 13 |
| Third groove | 14 |
| Negative electrode plate | 20 |
| Negative electrode current collector | 21 |
| Negative electrode active substance layer | 22 |
| Second groove | 23 |
| Fourth groove | 24 |
| Separator | 30 |
| Positive electrode tab | 41 |
| Negative electrode tab | 42 |
| First protective adhesive | 50 |
| First insulator | 60 |
| Second insulator | 70 |
| Second protective adhesive | 80 |

### DESCRIPTION OF EMBODIMENTS

The following clearly and completely describes the technical solutions in some embodiments of this application with reference to the accompanying drawings in some embodiments of this application. Apparently, the described embodiments are some but not all embodiments of this application.

It should be noted that when a component is referred to as being "fastened to" another component, it may be directly fastened to the another component, or there may be a component in between. When a component is deemed as being "connected to" another component, it may be directly connected to the another component, or there may be a component in between. When a component is deemed as being "provided on" another component, it may be directly provided on the another component, or there may be a component in between. The terms "vertical", "horizontal", "left", "right", and other similar expressions as used herein are for illustration only.

Unless otherwise defined, all technical and scientific terms used herein shall have the same meanings as commonly understood by those skilled in the art to which this application belongs. The terms used herein in the specification of this application are merely intended to describe specific embodiments but not intended to limit this application. The term "and/or" used herein includes any and all combinations of one or more related listed items.

Some embodiments of this application provide an electrode assembly, including a positive electrode plate, a negative electrode plate, a separator, and a positive electrode tab. The positive electrode plate includes a positive electrode current collector and a positive electrode active substance layer disposed on surface of the positive electrode current collector. The negative electrode plate is stacked with the positive electrode plate and includes a negative electrode current collector and a negative electrode active substance layer disposed on surface of the negative electrode current collector. The separator is disposed between the positive electrode plate and the negative electrode plate. The positive electrode tab is electrically connected to the positive electrode current collector. The positive electrode active substance layer is provided with a first groove, and one end of the positive electrode tab is disposed in the first groove and is electrically connected to the positive electrode current collector. The negative electrode active substance layer is provided with a second groove, the second groove is corresponding to the first groove, the second groove extends along a thickness direction of the electrode assembly to the negative electrode current collector, and the second groove is provided with a first protective adhesive inside.

In the electrode assembly, the first protective adhesive is filled to the second groove to ensure thickness consistency between the second groove and a body zone of the electrode plate, so as to alleviate the under-voltage problem at the tab position, thus reducing the risk of lithium precipitation. The second groove is corresponding to the first groove and extends along a thickness direction of the electrode assembly to the negative electrode current collector. This is to leave enough space for welding burrs of the positive electrode tab to prevent the welding burrs from penetrating the second groove; and even if the welding burrs penetrate the second groove, the positive electrode current collector electrically connected to the positive electrode tab comes into contact with the negative electrode current collector rather than the negative electrode active substance layer, thus preventing the most dangerous short circuit.

Some embodiments of this application are described in detail. Provided that there is no conflict, the following embodiments and features in the embodiments may be combined with each other.

### Embodiment 1

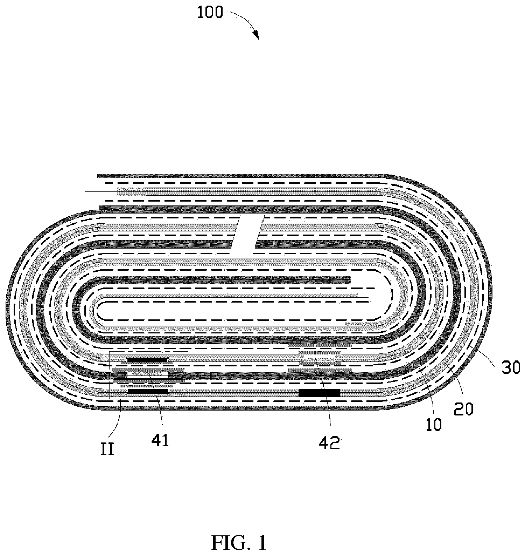

Referring to FIG. 1, FIG. 2, and FIG. 3, an electrode assembly 100 includes a positive electrode plate 10, a negative electrode plate 20, a separator 30, a positive electrode tab 41, and a negative electrode tab 42. The positive electrode plate 10 and the negative electrode plate 20 are stacked and wound. The separator 30 is disposed between the positive electrode plate 10 and the negative electrode plate 20. The positive electrode tab 41 is electrically connected to the positive electrode plate 10, and the negative electrode tab 42 is electrically connected to the negative electrode plate 20.

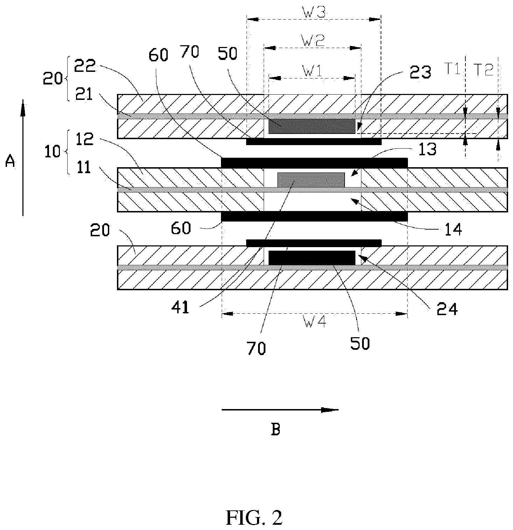

Specifically, referring to FIG. 2, the positive electrode plate 10 includes a positive electrode current collector 11 and a positive electrode active substance layer 12 disposed on surface of the positive electrode current collector 11. In this embodiment, two opposite side surfaces of the positive electrode current collector 11 are provided with the positive electrode active substance layer 12, respectively. The positive electrode active substance layer 12 is provided with a first groove 13 and a third groove 14. Along a thickness direction of the electrode assembly 100, that is, a direction indicated by arrow A in FIG. 2, a projection of the first groove 13 overlaps a fvprojection of the third groove 14, and a part of the positive electrode current collector 11 corresponding to the first groove 13 is exposed from the first groove 13 and the third groove 14. One end of the positive electrode tab 41 is disposed in the first groove 13 and is electrically connected to the positive electrode current collector 11. The positive electrode tab 41 is connected to the positive electrode current collector 11 by means including but not limited to ultrasonic welding, hot melt welding, and the like. With the provision of the third groove 14, on one hand, it is beneficial for preventing welding failures caused by contamination of a welding head by the positive electrode active substance layer 12 during welding, and on the other hand, when thickness of a tab is greater than depth of the first groove 13, the positive electrode current collector 11 in the first groove 13 can be bent toward the third groove 14 so that the third groove 14 can absorb thickness of the positive electrode tab 41, preventing the positive electrode tab 41 from protruding from surface of the positive electrode plate 10, thus maintaining the uniform overall thickness of the electrode assembly 100.

The negative electrode plate 20 includes a negative electrode current collector 21 and a negative electrode active substance layer 22 disposed on surface of the negative electrode current collector 21. In this embodiment, two opposite side surfaces of the negative electrode current collector 21 are provided with the negative electrode active substance layer 22. A second groove 23 and a fourth groove 24 are spaced apart on the negative electrode active substance layer 22, the second groove 23 is corresponding to the first groove 13, and the fourth groove 24 is corresponding to the third groove 14. Further, the second groove 23 extends along the thickness direction of the electrode assembly 100 to the negative electrode current collector 21, and the fourth groove 24 extends along the thickness direction of the electrode assembly 100 to the negative electrode current collector 21. This is to prevent burrs generated by lithium precipitation in the second groove 23 and the fourth groove 24 from contacting the tab, thus avoiding the problem of internal short circuit of the electrode assembly 100. The thickness direction of the electrode assembly 100 is in the direction indicated by arrow A in FIG. 2. The second groove 23 is corresponding to the first groove 13, the fourth groove 24 is corresponding to the third groove 14, and the second groove 23 and the fourth groove 24 extend along a thickness direction of the electrode assembly 100 to the negative electrode current collector 21. This is also to leave enough space for welding burrs of the positive electrode tab 41 to prevent the welding burrs from penetrating the second groove 23; and even if the welding burrs penetrate the second groove 23, the positive electrode current collector 11 electrically connected to the positive electrode tab 41 comes into contact with the negative electrode current collector 21 rather than the negative electrode active substance layer 22, thus preventing the most dangerous short circuit.

The second groove 23 and the fourth groove 24 are further provided with a first protective adhesive 50 to resolve thickness difference generated by the removal of the active material from the groove and to ensure the thickness consistency between the groove and the main area of the electrode plate, thus maintaining the consistency of the cycling performance of the electrode assembly 100 and improving the kinetic performance of the electrode assembly 100. The first protective adhesive 50 includes but is not limited to adhesive paper or other fluid filler adhesives, provided that it has insulating properties and can compensate for the thickness difference in the groove.

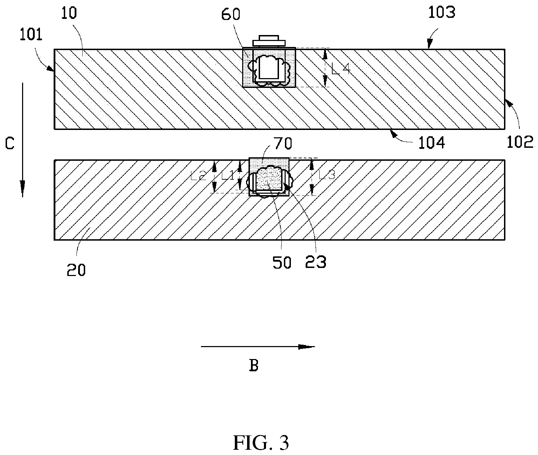

Still referring to FIG. 2, along the thickness direction of the electrode assembly 100, thickness of the first protective adhesive 50 is less than or equal to depth of the second groove 23 and less than or equal to depth of the fourth groove 24. This is to prevent the first protective adhesive 50 from overflowing onto the separator 30 after being filled to the grooves, thus avoiding an increase in the thickness of the local area. Referring to FIG. 3, in embodiment 1, the first protective adhesive 50 is located in the middle of the corresponding groove, so that a gap is left between periphery of the first protective adhesive 50 and the negative electrode active substance layer 22, so as to reduce the problem of overflowing when the first protective adhesive 50 is added. It should be understood that in other embodiments, the periphery of the first protective adhesive 50 can also be in contact with the negative electrode active substance layer 22. This application is not limited thereto.

Further, the positive electrode plate 10 includes a first end 101 and a second end 102 disposed opposite each other, and in a direction from the first end 101 to the second end 102, that is, a direction indicated by arrow B in FIG. 2, width of the positive electrode tab 41 is less than width of the second groove 23, so as to prevent the positive electrode tab 41 from coming into contact with the negative electrode active substance layer 22 at the edge of the second groove 23 and causing short circuit. Further, widths of the first groove 13, the third groove 14, the second groove 23 and the fourth groove 24 are roughly the same, so as to simplify the manufacturing of the electrode assembly 100. It should be understood that in other embodiments, widths of the first groove 13, the third groove 14, the second groove 23 and the fourth groove 24 may alternatively be different.

Still referring to FIG. 2 and FIG. 3, the electrode assembly 100 further includes a first insulator 60 and a second insulator 70. The first insulator 60 is disposed on the positive electrode plate 10 and the second insulator 70 is disposed on the negative electrode plate 20. The two first insulators 60 cover the first groove 13 and the third groove 14, respectively, and the first insulator 60 covers part of the positive electrode active substance layer 12. The two second insulators 70 cover the second groove 23 and the fourth groove 24, respectively, and the second insulator 70 covers part of the negative electrode active substance layer 22. In a case that the positive electrode active substance layer 12 and the negative electrode active substance layer 22 are of equal size, along a stacking direction of the positive electrode plate 10 and the negative electrode plate 20, forward projection area of the first insulator 60 is greater than forward projection area of the second insulator 70, so that the uncovered area of the negative electrode active substance layer 22 is greater than the uncovered area of the positive electrode active substance layer 12, allowing the negative electrode plate 20 to have sufficient positions for lithium intercalation, thus reducing lithium precipitation. Specifically, along the direction indicated by arrow A in FIG. 2, width of the first insulator 60 is greater than width of the second insulator 70.

The first insulator 60 and the second insulating member 70 have a thickness of 10 µm-20 µm to avoid increasing the local thickness of the electrode assembly 100. The first insulator 60 and the second insulator 70 are made of the same material, including but not limited to insulation materials such as adhesive paper. In this embodiment, the first insulator 60 and the second insulator 70 are single-sided tapes including a substrate layer and an adhesive layer, where thickness of the substrate layer accounts for 1/5 to 1/4 of the thickness of the tape, so as to provide a sufficient rigid filling effect and reduce a thickness difference between the groove and a body of the electrode plate.

In this embodiment, along the direction indicated by arrow B in FIG. 2, the first protective adhesive 50 has a width of W1, the second groove 23 has a width of W2, the second insulator 70 has a width of W3, and the first insulator 60 has a width of W4, where W1 < W2 < W3 < W4.

The positive electrode plate 10 further includes a first side edge 103 and a second side edge 104 disposed opposite each other, and the first end 101 and the second end 102 are both in contact with the first side edge 103 and the second side edge 104. In a direction extending from the first side edge 103 to the second side edge 104, that is, the direction indicated by arrow C in FIG. 3, the first protective adhesive 50 has a length of L1, the second groove 23 has a length of L2, the second insulator 70 has a length of L3, and the first insulator 60 has a length of L4, where L1 < L2 < L3 < L4.

Along the thickness direction of the electrode assembly 100, that is, the direction indicated by arrow A in FIG. 2, the first protective adhesive has a thickness of T1, and the second groove 23 has a depth of T2, where T1 ≤ T2. The first groove 13 has the same size as the third groove 14. The second groove 23 has the same size as the fourth groove 24.

Based on size design requirements, the size relationship between the second groove 23 and the first protective adhesive 50 satisfies: 1 mm ≤ L2-L1 ≤ 5 mm, 1 mm ≤ W2-W1 ≤ 5 mm, and 0 µm ≤ T2-T1 ≤ 20 µm. Thickness of the first protective adhesive 50 can be customized according to actual thickness of the negative electrode active substance layer 22 compacted.

The size relationship between the second groove 23 and the second insulator 70 satisfies: 1 mm ≤ L3-L2 ≤ 5 mm, and 1 mm ≤ W3-W2 ≤ 5 mm.

The size relationship between the first insulator 60 and the second insulator 70 satisfies: 1 mm ≤ L4-L3 ≤ 10 mm, and 1 mm ≤ W4-W3 ≤ 10 mm.

The negative electrode tab 42 is electrically connected to the negative electrode current collector 21. The negative electrode tab 42 is disposed in a way similar to the positive electrode tab 41, with adaptive modifications made according to polarities of the electrode of the positive electrode plate 10 and negative electrode plate 20. Details are not described herein again.

### Embodiment 2

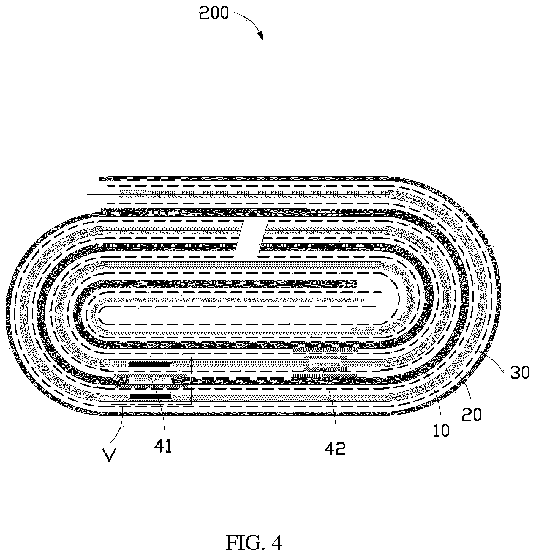

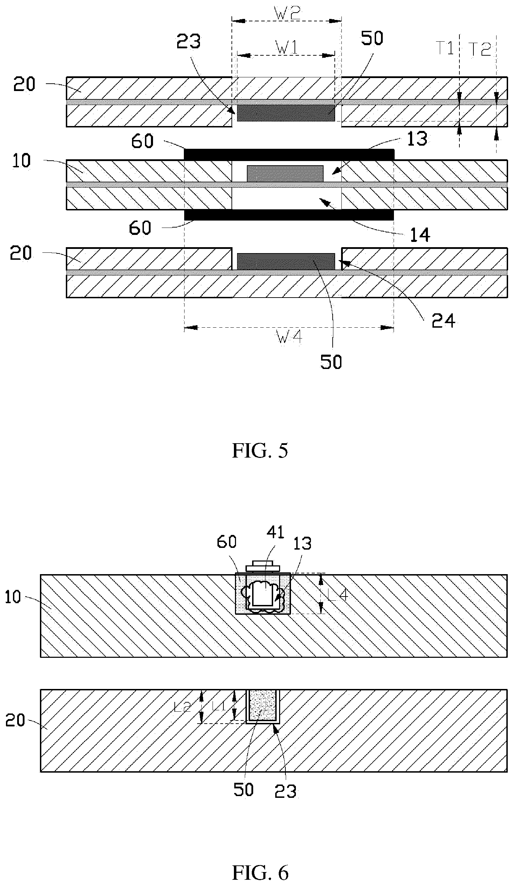

Referring to FIG. 4, FIG. 5, and FIG. 6, the electrode assembly 200 in Embodiment 2 is roughly the same as the electrode assembly 100 in embodiment 1, except that the second insulator 70 covering the second groove 23 and the fourth groove 24 is not provided on the negative electrode plate 20 of the electrode assembly 200. As the second insulator 70 is omitted, size of the first insulator 60 can be correspondingly reduced, which is conducive to improving the energy density of the electrode assembly 200.

In Embodiment 2, the size relationship between the second groove 23 and the first protective adhesive 50 satisfies: 1 mm ≤ L2-L1 ≤ 5 mm, 1 mm ≤ W2-W1 ≤ 5 mm, and 0 µm ≤ T2-T1 ≤ 20 µm.

The size relationship between the first insulator 60 and the second groove 23 satisfies: 1 mm ≤ L4-L2 ≤ 10 mm, and 1 mm ≤ W4-W2 ≤ 10 mm.

### Embodiment 3

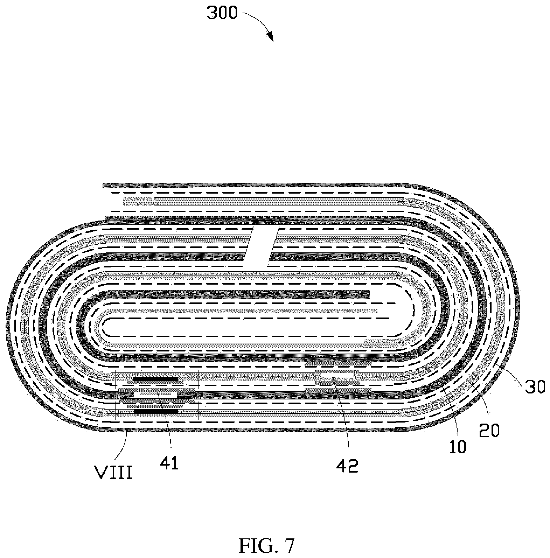

Referring to FIG. 7, FIG. 8, and FIG. 9, the electrode assembly 300 in Embodiment 3 is roughly the same as the electrode assembly 100 in embodiment 1, except that in the electrode assembly 300, the first protective adhesive 50 is filled to the second groove 23 and the fourth groove 24 with equal area, and the periphery of the first protective adhesive 50 is in contact with the negative electrode active substance layer 22 so that no gap is present between the first protective adhesive 50 and the second groove 23 or the fourth groove 24. The first protective adhesive 50 solidified does not flow, and the elimination of the gap in the groove is conducive to avoiding the overflow of active materials during the subsequent compression process of the electrode assembly 300, thus improving the pressure resistance and service life of the electrode assembly 300.

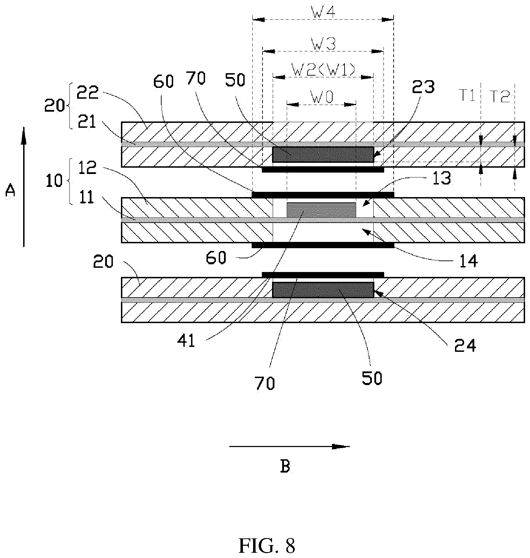

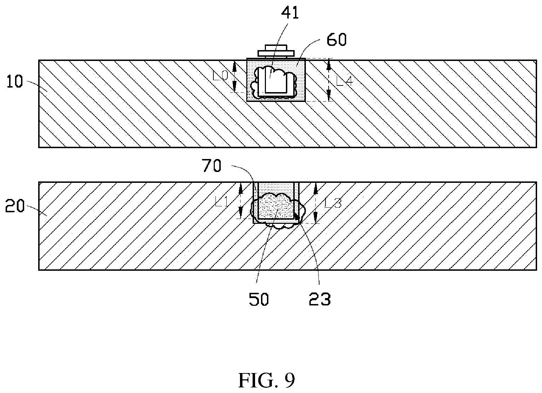

Referring to FIG. 8 and FIG. 9, the first protective adhesive 50 has a width of W1 and a length of L1. The second groove 23 has a width of W2 and a length of L2. As the first protective adhesive 50 is filled to the second groove 23 with equal area, the size relationship between the first protective adhesive 50 and the second groove 23 satisfies: W1 = W2, and L1 = L2.

The positive electrode tab 41 has a width of W0 and the positive electrode tab 41 located in the first groove 13 has a length of L0, where L0 < L1 = L2, and W0 < W1 = W2. Part of the positive electrode plate 41 located in the first groove 13 is completely covered by the first protective adhesive 50, which is conducive to reducing the possibility of accidental contact between the positive electrode plate 41 and the negative electrode active substance layer 22.

### Embodiment 4

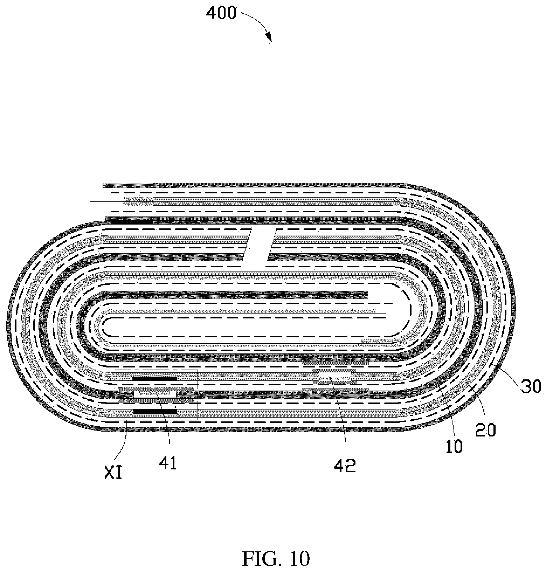

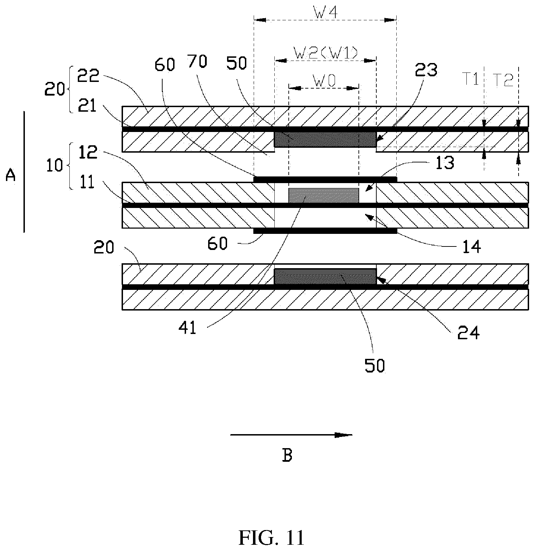

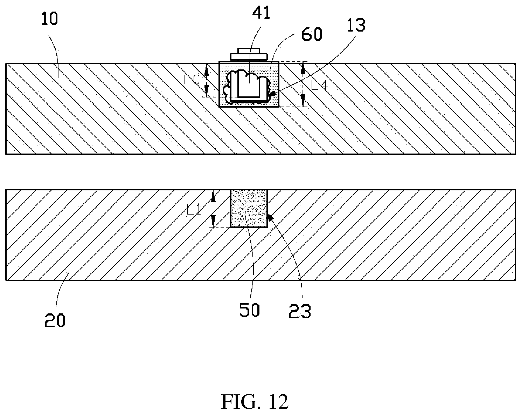

Referring to FIG. 10, FIG. 11, and FIG. 12, the electrode assembly 400 in embodiment 4 is roughly the same as the electrode assembly 300 in Embodiment 3, except that the second insulator 70 covering the second groove 23 and the fourth groove 24 is not provided on the negative electrode plate 20 of the electrode assembly 400.

In embodiment 4, the size relationship between the second groove 23 and the first protective adhesive 50 satisfies: L2 = L1, W2 = W1, and 0 µm ≤ T2-T1 ≤ 20 µm.

The size relationship between the first insulator 60 and the second groove 23 satisfies: 1 mm ≤ L4-L2 ≤ 10 mm, and 1 mm ≤ W4-W2 ≤ 10 mm.

### Embodiment 5

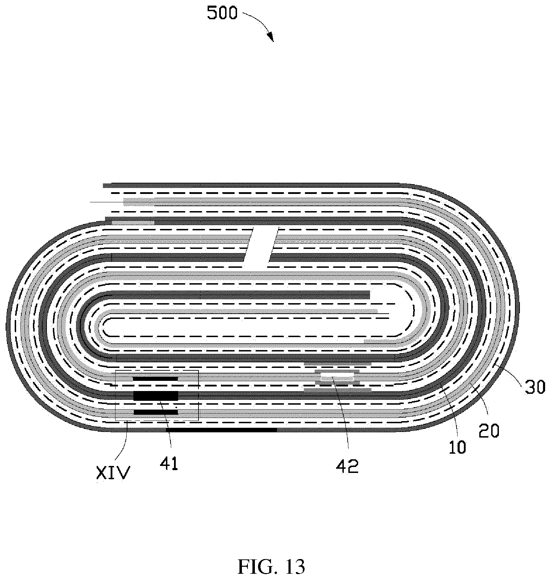

Referring to FIG. 13, FIG. 14, and FIG. 15, the electrode assembly 500 in Embodiment 5 is roughly the same as the electrode assembly 400 in embodiment 4, except that the electrode assembly 500 is not provided with the first insulator 60, and that the first groove 13 and the third groove 14 are provided with a second protective adhesive 80. The structure of the electrode assembly 500 can save the thickness space occupied by the first insulator 60 and the second insulator 70, improving the energy density of the electrode assembly 500. In addition, the first protective adhesive 50 and the second protective adhesive 80 added can play an insulating role, while ensuring surface flatness of the electrode plate and reducing the thickness difference of the main bodies of the electrode plate at the grooves.

The second protective adhesive 80 is filled to the first groove 13 and the third groove 14 with equal area, with periphery of the second protective adhesive 80 being in contact with the positive electrode active substance layer 12. The second protective adhesive 80 solidified does not flow either, and absence of a gap in the groove is conducive to avoiding the overflow of active materials during the subsequent compression process of the electrode assembly 500, thus improving the pressure resistance and service life of the electrode assembly 500.

In this embodiment, in order to ensure to provide sufficient positions for lithium intercalation on the negative electrode plate 20 and reduce the risk of lithium precipitation, along the stacking direction of the positive electrode plate 10 and the negative electrode plate 20, the projection area of the first groove 13 is greater than the projection area of the second groove 23. The first groove 13 has the same size as the third groove 14. The second groove 23 has the same size as the fourth groove 24.

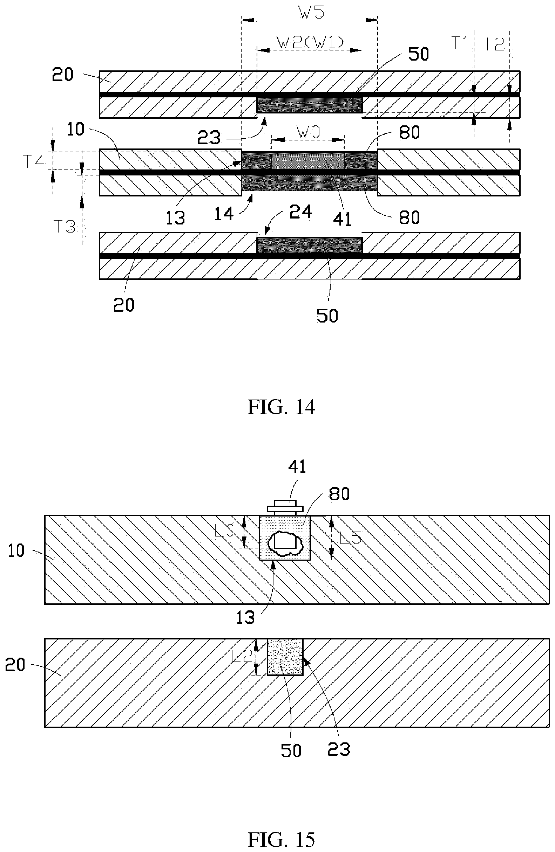

Still referring to FIG. 14 and FIG. 15, in Embodiment 5, width of the second protective adhesive 80 and width of the first groove 13 are the same, both of which are W5. Length of the second protective adhesive 80 and length of the first groove 13 are the same, both of which are L5. Size of the first groove 13 and the third groove 14 are the same, with a depth of T3, and the second protective adhesive 80 has a thickness of T4, where 0 µm ≤ T4-T3 ≤ 20 µm. Thickness of the second protective adhesive 80 is less than or equal to depth of the first groove 13 and the third groove 14.

The positive electrode tab 41 has a width of W0 and a length of L0. The second groove 23 has a width of W2 and a length of L2, where 1 mm ≤ L2-L0 ≤ 5 mm, and 1 mm ≤ W2-W0 ≤ 5 mm.

The size relationship between the first groove 13 and the second groove 23 satisfies: 1 mm ≤ L5-L2 ≤ 10 mm, and 1 mm ≤ W5-W2 ≤ 10 mm.

Some embodiments of this application further provide an electrochemical apparatus (not shown in the figure), including a packaging case (not shown in the figure) and the electrode assembly in any one or a combination of the foregoing embodiments, where the electrode assembly is accommodated in the packaging case.

The foregoing embodiments are merely intended to describe the technical solutions of this application, but not intended to constitute any limitation. Although this application is described in detail with reference to the foregoing preferred embodiments, persons of ordinary skill in the art should understand that modifications or equivalent replacements can be made to the technical solutions of this application, without departing from the spirit and scope of the technical solutions of this application.

## Claims

1. An electrode assembly, comprising:
a positive electrode plate, comprising a positive electrode current collector and a positive electrode active substance layer disposed on surface of the positive electrode current collector;
a negative electrode plate, comprising a negative electrode current collector and a negative electrode active substance layer disposed on surface of the negative electrode current collector;
a separator, disposed between the positive electrode plate and the negative electrode plate; and
a positive electrode tab, electrically connected to the positive electrode current collector;
wherein the positive electrode active substance layer is provided with a first groove, and one end of the positive electrode tab is disposed in the first groove and is electrically connected to the positive electrode current collector; and
the negative electrode active substance layer is provided with a second groove, the second groove is corresponding to the first groove, the second groove extends along a thickness direction of the electrode assembly to the negative electrode current collector, and the second groove is provided with a first protective adhesive inside.

2. The electrode assembly according to claim 1, wherein in the thickness direction of the electrode assembly, thickness of the first protective adhesive is less than or equal to depth of the second groove.

3. The electrode assembly according to claim 1, wherein the positive electrode plate comprises a first end and a second end disposed opposite each other, and in a direction from the first end to the second end, width of the positive electrode tab is less than width of the second groove.

4. The electrode assembly according to claim 1, wherein periphery of the first protective adhesive is in contact with the negative electrode active substance layer.

5. The electrode assembly according to claim 1, wherein the positive electrode plate, the separator, and the negative electrode plate are disposed in sequence and wound.

6. The electrode assembly according to claim 1, wherein the positive electrode plate is provided with a first insulator, and the first insulator covers the first groove.

7. The electrode assembly according to claim 6, wherein the first insulator covers part of the positive electrode active substance layer.

8. The electrode assembly according to claim 6, wherein the negative electrode plate is provided with a second insulator, and the second insulator covers the second groove.

9. The electrode assembly according to claim 8, wherein the second insulator covers part of the negative electrode active substance layer.

10. The electrode assembly according to claim 8, wherein along the thickness direction of the electrode assembly, a projection area of the first insulator is greater than a projection area of the second insulator.

11. The electrode assembly according to claim 1, wherein the first groove is provided with a second protective adhesive inside.

12. The electrode assembly according to claim 11, wherein periphery of the second protective adhesive is in contact with the positive electrode active substance layer.

13. An electrochemical apparatus, comprising a packaging case and the electrode assembly according to any one of claims 1 to 12, wherein the electrode assembly is accommodated in the packaging case.
